# EUROPEAN PATENT APPLICATION

(11) **EP 1 445 348 A1**
(43) Date of publication of application: **11.08.2004**
(21) Application number: 02775518.0
(22) Date of filing: 08.11.2002
(51) Int. Cl.: C23C 22/64, C23C 22/78, C23C 22/83, H01G 9/052, H01G 9/04, H01G 9/07

(54) **COMPOSITE TITANIUM OXIDE FILM AND METHOD FOR FORMATION THEREOF AND TITANIUM ELECTROLYTIC CAPACITOR**

(30) Priority: 12.11.2001 JP 2001345815; 12.11.2001 JP 2001345875; 12.11.2001 JP 2001345883
(71) Applicant: Toho Titanium Co., Ltd., Chigasaki-shi, Kanagawa-ken 253-8510 (JP)
(72) Inventor: ARAI, Yoshiyuki c/o TOHO TITANIUM CO., LTD., Chigasaki-shi, Kanagawa 253-8510 (JP)
(74) Representative: Parnham, Kevin
(86) International application number: PCT/JP2002/011691
(87) International publication number: WO 2003/042425

(57) **Abstract**

A compact type large capacity titanium electrolytic capacitor with minimized leakage current is provided which takes advantage of a stable complex titanium oxide film having a large surface dielectric constant formed on a titanium substrate.

The complex titanium oxide film is a film of a complex titanium oxide represented by the general formula Mₓ(TiO₃)_{y} wherein M is at least an ion of metal selected from the group consisting of lithium, magnesium, calcium, strontium, barium and lanthanum, x is equivalent to the valence of TiO₃, and y is equivalent to the valence of the metal ion M. The film has a thickness of 5 µm or less and is composed of particles having an average particle diameter of 5-250 nm.

A titanium electrolytic capacitor using, as an anode, a metal substrate having the above complex titanium oxide film is also provided.

## Description

### (Field of the Invention)

The present invention relates to a complex titanium oxide film, a method for forming the same, and.a capacitor using the complex titanium oxide film. More particularly, the invention relates to a dense, complex titanium oxide film capable of forming a capacitor of excellent insulation property and great electrostatic capacitance on a metal titanium substrate, a method for forming the oxide film, and a titanium electrolytic capacitor wherein the metal titanium substrate having the dense oxide film obtained by the method is used as an anode.

### (Prior Art)

As compact type large capacitance electrolytic capacitors of the prior art represented by solid electrolytic capacitors, tantalum electrolytic capacitors and aluminum electrolytic capacitors typically have been used.

The tantalum electrolytic capacitors are made using a porous sintered body of metal tantalum as an electrode, with a dielectric oxide film formed on it by anodic oxidation. The oxide film of tantalum obtained in this manner is characterized by great stability and hence excellent dielectric property and long life. The aluminum electrolytic capacitors are similarly made using a metal aluminum foil or a sintered body with aluminum oxide as a dielectric formed by anodic oxidation.

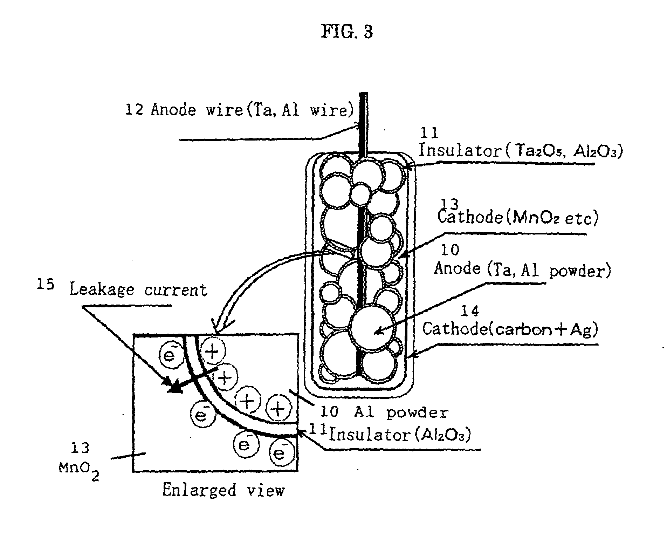

FIG. 3 diagrammatically shows, by way of convenience, a typical structure common to tantalum and aluminum electrolytic capacitors. Here an anode 10 used is either a porous sintered body of a Ta powder having a layer of tantalum oxide (Ta₂O₅) formed on it as an insulator layer 11 or a porous sintered body of an Al powder having an aluminum oxide (Al₂O₃) layer formed on it as an insulator layer. As an anode (lead) wire 12, either a Ta wire or an Al wire is embedded in the sintered body. As cathodes, a solid electrolyte 13 of manganese dioxide (MnO₂) and a carbon+Ag cathode (cathode conductive layer) 14 are shown by way of example.

In the case of a tantalum electrolytic capacitor, for example, a tantalum powder having a particle size of 0.1-10 µm is compression molded by a press and then sintered to form a porous sintered body. The sintered body is anodically oxidized to obtain an oxide film. The surface area of this porous sintered body is so large that a great electrostatic capacitance is attained. Following this, a manganese compound such as manganese sulfate is applied to the oxide film by heat treatment to obtain manganese oxide as a cathode or, alternatively, the porous sintered body is immersed in an aqueous solution of manganese nitrate and the immersed body is thermally decomposed in an electric furnace to produce manganese dioxide. The latter procedure may be repeated to allow the manganese dioxide layer to grow until a sufficient electrolyte layer is obtained. Thus, the pores in the porous sintered body are thoroughly filled and coated with manganese dioxide. As an alternative, a capacitor can be made using a conductive polymer as a cathode. On the cathode so obtained, a carbon layer is deposited to lower its conductive resistance, a silver paste is applied to the carbon layer, and then an outer lead wire (not shown) is soldered in place. A conductive polymer may be applied after the formation of the manganese dioxide to provide a double structure. A liquid electrolyte may be used as well. An aluminum electrolytic capacitor can be made in substantially the same manner as with the tantalum electrolytic capacitor.

Tantalum electrolytic capacitor has a problem of high tantalum cost. On the other hand, aluminum electrolytic capacitor, despite low aluminum cost, has problems too. During the fabrication of the capacitor, as illustrated on an enlarged scale in Fig. 3, oxygen deficiency tends to occur in the insulator layer 11 that is an aluminum oxide film and the film begins to exhibit a semiconducting property, resulting in large leakage current and hence a short life of the capacitor. In addition, aluminum has a smaller dielectric constant per unit area than tantalum, which renders it difficult to make a compact type capacitor of large capacitance.

In order to solve the above-mentioned problems, attempts have been made to develop titanium electrolytic capacitors in which metal titanium is used as an anode and an oxide film such as titanium oxide or complex titanium oxide is formed thereon. Since titanium is less costly than tantalum and since titanium oxide and complex titanium oxides such as barium titanate have very high dielectric constants as compared with tantalum oxide or aluminum oxide, the titanium electrolytic capacitor has a great potential in the development of a low-cost, large-capacitance electrolytic capacitor that solves the problems of the prior art.

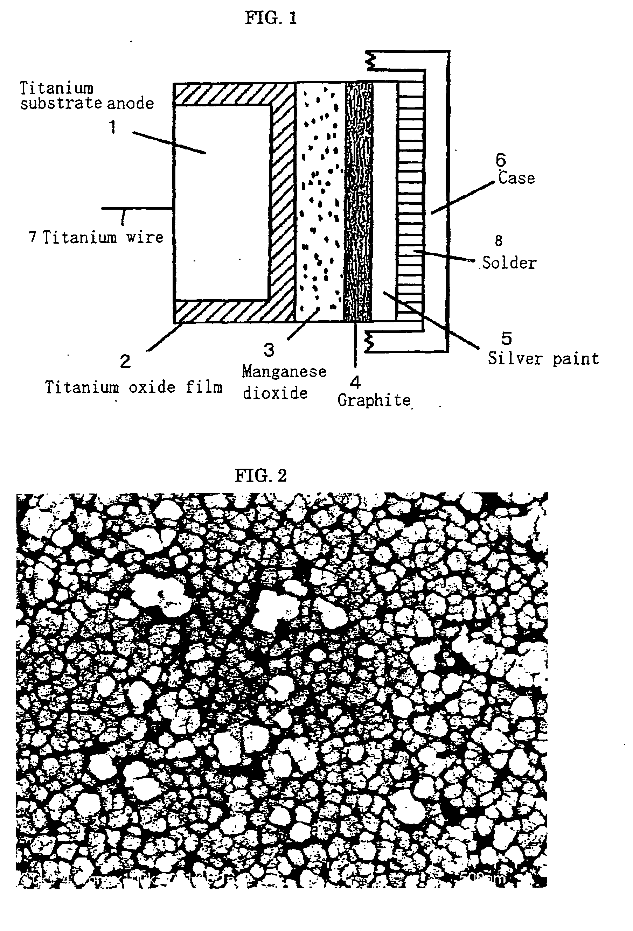

FIG. 1 is a schematic view of a titanium electrolytic capacitor (Ta or Al powder in Fig. 3 is replaced with Ti powder; Ta or Al oxide is replaced with Ti oxide; and Ta or Al wire is replaced with Ti wire). On a titanium substrate anode 1 to which a titanium (lead) wire 7 is attached, a titanium oxide film or a complex titanium oxide film 2 is formed, constituting an anode. The anode is provided with a titanium wire. As in Fig. 3, there is shown a structure in which MnO₂ is used as a solid electrolyte 3, and a carbon layer 4 is deposited on it to lower the conductive resistance. Further, a silver paste 5 is applied and an outer lead wire (not shown) is joined by solder 8 to the silver paste. The element thus fabricated is enclosed in a case 6 to protect the element from ambient moisture or contamination. In order to develop such a titanium electrolyte capacitor, various efforts have been made, especially for the improvement in the dielectric constant of the titanium oxide film or complex titanium oxide film as a dielectric film.

For example, Japanese Patent Application Kokai No. 5-121,275 discloses a method for producing a titanium electrolytic capacitor which comprises the steps of: conducting anodic oxidation of a titanium metal plate in an electrolyte-containing aqueous solution at a constant voltage, terminating the anodic oxidation before the current starts to increase, conducting anodic oxidation at 60°C or below using an electrolyte containing an organic solvent with a water content of 60 wt% or less, thereby forming an oxide film on the titanium plate, and heat treating the film at 160-350°C, and then, with the resulting titanium plate used as an anode, forming an electrode (platinum foil) on the oxide film through the medium of a solid electrode (such as manganese dioxide) or an electrolyte solution (4 wt% of ammonium phosphate, 36 wt% of water and 60 wt% of ethylene glycol). The method is characterized in that a titanium plate having an oxide film formed by anodic oxidation in an aqueous solution is again anodically oxidized in an electrolyte containing an organic solvent with a water content of 60 wt% or less so as to form an oxide film on the titanium plate.

Japanese Patent Application Kokai No. 9-17,684 discloses a capacitor characterized by: a porous sintered body composed of metal mainly comprising titanium; a dielectric film formed on the sintered body, mainly comprising perovskite-type complex oxide, such as strontium titanate; an electrode comprising a conductor or semiconductor formed on the surface of the dielectric film; and an opposed electrode (a graphite layer and a silver electrode layer) which is in electric contact with the conductor or semiconductor electrode and is opposed to the sintered body, wherein the conductor or semiconductor has a double layered structure of an oxide of metal such as manganese or nickel and a conductive macromolecular compound (polypyrrole). Since the electrode comprising a conductor or semiconductor is formed on the dielectric film, large electrostatic capacitance can be attained without enlarging the whole capacitor.

Further, Japanese Patent Application Kokai No. 2000-77,274 discloses a capacitor and a method for producing the same. According to the disclosure, a porous sintered body of a metal mainly comprising titanium is subjected to heat treatment in an alkaline aqueous solution containing A ions (A is at least one selected from among Ba, Sr and Pb) and B ions (B is at least one selected from Zr and Ti), thereby forming an ABO₃ film on the surface of the porous sintered body; the porous sintered body having the ABO₃ film thereon is heat treated in an alkaline aqueous solution containing C ions (C is at least one selected from Ba and Sr) and Pb ions to form a conductive CPbO₃ film as an opposed electrode; and then a graphite layer and a silver electrode layer are formed to obtain a capacitor. The reference reveals that a compact type capacitor having a large electrostatic capacitance can thus be easily produced.

### (Problem to be solved by the invention)

In the above-mentioned prior art, the dielectric constant of dielectric film is improved, and large capacitance capacitors have been produced. However, though the titanium oxide films on the surface of metal titanium formed by the above-mentioned conventional methods have a high dielectric constant, they possess such inadequate denseness and stability that, when used as a capacitor, their leakage current is too large yet for practical purposes.

Therefore, it is an object of the present invention to develop a complex titanium oxide film having a metal titanium substrate surface with a high dielectric constant and high stability and also to develop a method for forming such an oxide film, and further to provide a titanium electrolytic capacitor which is compact and has a large capacitance, small leakage current and long life.

### (Means to solve the problem)

The present inventor has made intensive and extensive studies with the view to solving the above-mentioned difficulties of the prior art on the method for forming an oxide film mainly comprising titanium oxide on the surface of a metal titanium substrate, and have found that a complex oxide film of a certain thickness made up of particles of a certain particle size is a stable oxide film having a high dielectric constant and little leakage current. This discovery has now led to the present invention. It has also been found that such a complex titanium oxide film can be produced either by treating a metal titanium substrate with a hydroxide of an alkali metal and treating the pretreated substrate with an aqueous solution containing one or more metal ions desired or by first forming a film of a potassium salt of titanic acid on the surface of the metal titanium substrate and then treating the surface with an aqueous solution containing a metal ion. The discovery has also lead to the present invention.

Thus, the complex titanium oxide film according to the present invention is characterized in that it is a film of a complex titanium oxide containing titanium and at least one ion of metal selected from the group consisting of lithium, magnesium, calcium, strontium, barium and lanthanum formed on the surface of a metal titanium substrate, with a film thickness of 5 µm or less and an average particle diameter of 5-250 nm.

The method of the invention for forming such a complex titanium oxide film is characterized by the steps of treating a metal titanium substrate with a hydroxide of an alkali metal and then treating the pretreated surface with an aqueous solution containing at least one ion of metal selected from the group consisting of lithium, magnesium, calcium, strontium, barium and lanthanum, thereby forming a film of a complex titanium oxide containing titanium and at least one ion of metal selected from the group consisting of lithium, magnesium, calcium, strontium, barium and lanthanum .

Also, the method of the invention for forming such a complex titanium oxide film is characterized by the steps of forming a film of a potassium salt of titanic acid on the surface of a metal titanium substrate and then treating the film surface with an aqueous solution containing at least one ion of metal selected from the group consisting of lithium, magnesium, calcium, strontium, barium and lanthanum, thereby allowing the metal titanium substrate surface to contain titanium and at least one ion of metal selected from the group consisting of lithium, magnesium, calcium, strontium, barium and lanthanum.

Further, the invention provides a titanium electrolytic capacitor characterized by the above-described complex titanium oxide film and also by the use, as an anode, of the metal titanium substrate having the complex titanium oxide film formed by the above method.

For the purposes of the invention the complex titanium oxide is desirably at least one oxide selected from among barium titanate, strontium titanate and barium-strontium titanate.

### (Brief Description of the Drawings)

FIG. 1 is a schematic view of a titanium electrolytic capacitor;
FIG. 2 is a scanning electron micrograph (SEM) of a complex titanium oxide film according to the present invention;
FIG. 3 is a diagrammatic view of a tantalum electrolytic capacitor and an aluminum electrolytic capacitor as combined; and
FIG. 4 is an X-ray spectrophotograph of a complex titanium oxide film embodying the present invention.

### (Best Mode for Carrying Out the Invention)

The complex titanium oxide film according to the present invention comprises a compound containing titanium and at least an ion of metal selected from the group consisting of lithium, magnesium, calcium, strontium, barium and lanthanum and which is represented by the general formula (1)

(M_{2/x}O) ·y(TiO₂) (1)

wherein M is at least an ion of metal selected from the group consisting of lithium, magnesium, calcium, strontium, barium and lanthanum, x is equivalent to the valence of the metal ion M, and y is 0.1-10). As the metal ion M, strontium and barium are preferred. To be more concrete, barium titanate, strontium titanate, and barium strontium titanate of the general formula (2)

BaₙSr₁₋ₙTiO₃ (2)

wherein n is a real number represented by 0□n≦1 are preferred. In the general formula (2), the atomic ratio of (Ba+Sr) and Ti is not necessarily be 1 but is 0.90≦ (Ba+Sr)/Ti≦1.10. The complex titanium oxide film of the invention is not limited to the one represented by the general formula (1) above; the titanium oxide film may be present between a metal titanium substrate surface and the complex titanium oxide or inside or on the surface of the complex titanium oxide film.

The thickness of the complex titanium oxide film according to the invention is 5 µm or less. When the film is thicker than 5 µm the electrostatic capacitance as a dielectric in the resulting capacitor is low. If the oxide film is extremely thin, the electrostatic capacitance increases at the sacrifice of film strength. Moreover, the homogeneity of the film is adversely affected and fabrication of a capacitor can cause leakage current. For these reasons the complex titanium oxide film desirably ranges in thickness from 0.5 to 5 µm.

The complex titanium oxide film of the invention is essentially characterized in that the film is composed of fine particles of a complex titanium oxide represented by the general formula (1) or (2)having an average particle diameter of 5-250 nm, preferably 10-150 nm, most preferably 10-100 nm. In FIG. 2 is shown a scanning electron micrograph (SEM) of the surface of a complex titanium oxide film formed under the invention. For the purposes of the invention the particles that constitute a complex titanium oxide film are secondary particles as aggregates of primary particles several nanometers in size. In the SEM of FIG 2, they are shown forming white or gray distinct sections partitioned by black portions. A plurality of such fine particle layers are stacked up to form a dense film. A titanium electrolytic capacitor thus produced is a high capacitance and stable one with little leakage current due to oxide film crack or peeling. Conversely if the average diameter of the particles that constitute a film is greater than 1 µm, the number of the particles to be stacked in layers is extremely small, and the interstices among the particles lead to an unusual increase in the leakage current of the resulting capacitor. The complex titanium oxide film of the invention is dense, with very short distances among the (secondary) particles that constitute the film (the black portions in the SEM of FIG. 2). To be more specific, the distances among the particles are 100 nm or less, preferably 50 nm or less, most preferably 20 nm or less. Furthermore, as stated above, the complex titanium oxide film of the invention is composed of a plurality of particle layers stacked on upon another. Since a plurality of finer particle layers are laminated, the film is thin, with the consequence that no leakage current and large electrostatic capacitance were ensured. When the number of particle layers constituting a complex titanium oxide film is represented by the ratio of the film thickness (µm) to the average diameter (µm) of the particles [film thickness (µm)/average particle diameter (µm)], the number of the laminated layers of particles in the complex titanium oxide film according to the present invention is 3 or more, preferably 5-50, more preferably 10-30.

Techniques for forming a complex titanium oxide film such as a film of strontium titanate on the surface of a metal titanium substrate have hitherto been reported in the art. For instance, "Growth of Strontium Titanate Films of Controlled Thickness by the Hydrothermal-Electrochemical Method", (Journal of American Ceramic Society, 77 [11] 2889-97 (1994), discloses strontium titanate films formed on metal titanium by the so-called hydrothermal-electrochemical method. However, the films formed by that method are dissimilar in structure to the films of the present invention in that the former films have a columnar structure in cross section although the surface appears to be made up of particles, whereas the films according to the invention such as of complex titanium oxide consist of multiple layers stacked together. The former method electrochemically forms oxide films and, as a consequence, the resulting structure is columnar. The interstices left among the columnar crystals permit the leakage of current from the end product capacitor.

The metal titanium substrate to be used in the present invention is a porous sintered body obtained by sintering a metal titanium plate or a metal titanium powder. In general, for the production of a titanium electrolytic capacitor, a porous sintered body obtained from the latter metal titanium powder is used as an anode. In producing the porous sintered body, an embrittled titanium hydride powder may be used as the starting material instead of metal titanium powder. When such titanium hydride powder is used, it is subjected to heat treatment under a reduced pressure for dehydrogenation, before, during and after the sintering. Such a metal titanium powder or hydrogenated titanium powder can be produced by any known method. For example, a hydrogenated titanium powder is prepared by first hydrogenating and embrittling a titanium material such as sponge titanium, titanium chip or other scrap, crushing and pulverizing, and then classifying or sieving to adjust the particle size of the product. A metal titanium powder is obtained by dehydrating this hydrogenated titanium powder by heating with or without the application of a vacuum.

When a metal titanium powder is used for preparing the above-mentioned porous sintered body, the metal titanium powder usually is composed of particles having diameters of 0.1-150 µm, preferably 0.1-50 µm, and an average particle diameter of 0.5-100 µm, preferably 0.5-10 µm. With respect to the method for preparing the porous sintered body, any of conventional methods can be used. For example, the titanium powder is first pressure formed by a press molder. If necessary, a binder such as styrene resin, acrylic resin or camphor, or a solution of such a binder in an organic solvent such as toluene or xylene is added to and mixed with the titanium powder. The thus-molded substance is thereafter sintered in vacuum at 600-1100°C. When the porous sintered body is used for a capacitor, a titanium wire is attached to it during the pressure forming or after the sintering. In order to obtain a capacitor with a large electrostatic capacitance, it is necessary that the porous sintered body should have as large a specific surface area as possible. Specifically stated, it is desirable that the porous sintered body be made so that its sintering density (the ratio of the density of the porous sintered body to the absolute specific gravity of metal titanium) is in the range of 30-70%. As the sintering density is increased, the specific surface area decreases. When the sintering density is too low, the specific surface area is large but the strength of the porous sintered body becomes inadequate for a capacitor.

The method for forming a complex titanium oxide film in accordance with the present invention will now be concretely explained below.

First, the metal titanium substrate is treated in an aqueous solution of an alkali metal (the first treatment step). Examples of the alkali metal are sodium hydroxide and potassium hydroxide, preferably potassium hydroxide.

The thickness of the complex titanium oxide film and the particle diameter of the particles that constitute the film to be obtained are governed by the treatment conditions of the first treatment step. The concentration of the alkali metal in the aqueous solution is 0.1-100 M, preferably 3-20 M. The temperature for treatment is 200°C or below, preferably 60-150°C. The treatment time varies with the concentration of the aqueous alkali metal solution and the treatment temperature, but it usually is 10 minutes or more, preferably 30 minutes-10 hours.

Prior to the treatment with an aqueous alkali metal solution in the manner described, it is desirable to remove the dirt deposited on the metal titanium substrate surface and perform a surface treatment that would increase the specific surface area of the substrate surface. Typically, the surface is treated with an acid such as hydrogen fluoride or with an oxidant or the like.

The treatment of the metal titanium substrate with an aqueous alkali metal solution as described above gives birth to a titanate film of an alkali metal on the metal titanium substrate surface. Of the films of metal titanates, a film of a potassium salt of titanic acid is particularly desirable. To be more specific, a metal titanium substrate is treated with an aqueous potassium hydroxide solution to form a potassium titanate film on the surface of the metal titanium substrate. The term potassium salt of titanic acid as used herein means a compound having a composition represented by KTiO₂(OH) or a potassium titanate represented by K₂O·n(TiO₂) (where n is an integer of 2-8). The potassium titanate, which forms a fibrous or whisker-like dense film, is suitable for forming a complex titanium oxide film in conformity with the present invention.

A film of a titanium acid salt of an alkali metal such as the potassium titanate referred to above is formed on the surface of a metal titanium substrate. Following this, where necessary, the coated metal titanium substrate is dried. The drying is performed at from ordinary temperature to 200°C.

Next, the metal titanium substrate coated with the titanate of alkali metal is treated (the second treatment step) by immersing in an aqueous solution containing at least an ion of metal selected from the group consisting of lithium, magnesium, calcium, strontium, barium and lanthanum. The compounds of those metals to be used are hydroxides, nitrates, sulfates, and chlorides. Examples of those compounds are lithium hydroxide, lithium chloride, lithium nitrate, magnesium hydroxide, magnesium chloride, magnesium nitrate, calcium hydroxide, calcium nitrate, calcium sulfate, calcium chloride, strontium hydroxide, strontium nitrate, strontium sulfate, strontium chloride, barium hydroxide, barium nitrate, barium sulfate, barium chloride, lanthanum hydroxide, lanthanum nitrate, lanthanum sulfate and lanthanum chloride. Particularly desirable among those compounds are lithium hydroxide, strontium hydroxide, barium hydroxide, strontium chloride and barium chloride. These compounds are used singly or as a combination of two or more.

The thickness of the complex titanium oxide film and the particle diameter of the particles that constitute the film to be obtained are governed by the treatment conditions of the second treatment step as well as in the first step. The concentration of the metal ion in an aqueous solution containing at least one ion of metal selected from the group consisting of lithium, magnesium, calcium, strontium, barium and lanthanum is 0.1-100 M, preferably 0.3-10 M. The treatment time varies with the concentration of the aqueous alkali metal solution and the treatment temperature, it usually is one minute or more, preferably 30 minutes-10 hours. The alkali metal such as potassium hydroxide or sodium hydroxide used in the first treatment step may be allowed to be present also in the above-mentioned aqueous metal ion solution.

In the manner described above, the film of a titanium acid salt of alkali metal formed in the first treatment step is treated with another metal ion in the second treatment step, whereby the alkali metal such as potassium is replaced with another metal, leading to the formation of a dense complex titanium oxide film under the invention. A desirable process for forming a complex titanium oxide film in accordance with the present invention is as follows:
1) A metal titanium substrate is first treated (the first treatment step) with an aqueous solution of potassium hydroxide at 50-100°C and then dried at ordinary temperature to form a fibrous potassium titanate film on the surface of the metal titanium substrate.
2) The metal titanium substrate coated with the potassium titanate film is then treated (the second treatment step) with an aqueous solution of barium hydroxide or strontium hydroxide (or their mixture) at 50-100°C. The treated surface is dried to obtain a barium titanate, strontium titanate or barium strontium titanate as a complex titanium oxide film according to the invention.

A solid electrolytic capacitor can be made using, as an anode, the metal titanium substrate having the complex titanium oxide film formed in conformity with the invention. As for a cathode, it may be formed, as with a tantalum electrolytic capacitor, by heat treating an oxide film with a manganese compound such as manganese sulfate to form a manganese oxide cathode, or by immersing a porous sintered body in an aqueous solution of manganese nitrate, subjecting the immersed body to thermal decomposition in n electric oven to form manganese dioxide, and repeating the procedure until the manganese dioxide grows to form an adequate layer, or by using a conductive macromolecular compound as a cathode of the capacitor. Following this, a carbon layer is deposited on the surface to reduce the conductive resistance, a silver paste is applied, and then external lead wire (not shown) is affixed in place by soldering. It is further possible to produce a double structure by forming a layer of conductive polymer over the manganese dioxide layer. Liquid electrolyte may be used as well. Thus, any of known cathode structure illustrated above as the prior art, including the use of either solid or liquid electrolyte, may be adopted.

### (Examples)

The effects of the present invention will be concretely explained below with reference to the following Examples and Comparative Examples.

Throughout the following examples, the evaluation of the insulation property of oxide films and the measurement of capacitance were made in the following manner.

### 1) Evaluation of insulation property

### (measurement of leakage current)

A specimen of a titanium plate having a complex titanium oxide film was masked with an insulating tape, leaving an electrode area of approximately 1 cm² uncovered. Over this electrode area was formed an opposite electrode with conductive paste, conductive tape or the like as a negative electrode. Different voltages of 5 V, 10 V, 15 V, 20 V and 30 V were applied. One minute after each application, the value of current flowing between the cathode and the anode (leakage current) was measured. Since the value of leakage current can vary depending on the order of voltage application, the measurement was made from the lower voltage side upward.

### 3. Measurement of capacitance

Each specimen used for the measurement of leakage current was utilized as a cathode, and a titanium plate (20 mm by 100 mm) was used as the opposite electrode. Under the following conditions, the capacitance of the film was directly measured with an ICR (inductance·capacitance·resistance) meter.

### · Measurement conditions

Electrolytic solution: an aqueous solution of ammonium adipate (150 g/L)
Frequency: 120 Hz
Amplitude: 1 V

(Note) In this measurement method the capacitance values of opposing electodes are added in series, but the capacitance of the Ti plate is large enough as compared with the capacitance of the test electrode to be ignored. (The total capacitance is represented by the formula: 1/total capacitance = 1/test sample capacitance + 1/Ti plate capacitance. Therefore, when the capacitance of the Ti plate is sufficiently larger than that of the specimen, the latter can be ignored.)

### 3) Film thickness

The thickness of the film was calculated from the weights and the film-forming surface areas before and after the formation of the complex titanium oxide film.

### 4) Average particle diameter

From a scanning electron micrograph (SEM) of each film specimen the white and gray portions were regarded as particles, and the diameters of circles having areas equal to the projection areas of the individual particles were calculated by image analysis, and the mean value was determined as the average diameter of the particles.

### <Example 1>

A metal titanium plate was placed in an 8 M aqueous solution of potassium hydroxide and treated at 80°C for 240 min. (The first treatment step) This metal titanium plate was dried at room temperature and then placed in a 1 M aqueous solution of barium hydroxide for treatment at 60°C for 360 min. (The second treatment step) The treated metal titanium plate was dried at room temperature, whereby a barium titanate film was formed on the metal titanium plate.

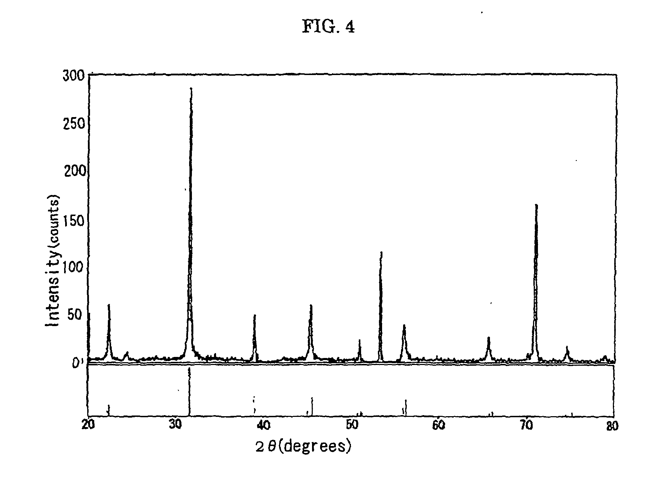

The oxide film was measured for the film thickness, particle diameter, insulation property, and capacitance. The results are shown in Table 1. A SEM of the complex titanium oxide film thus obtained is shown in FIG. 2 and an X-ray spectrograph of the complex oxide film is shown in FIG. 4.

### <Example 2>

A metal titanium plate was placed in a 10 M aqueous solution of potassium hydroxide and treated at 80°C for 240 min. (The first treatment step) This metal titanium plate was dried at room temperature and then placed in a 0.5 M aqueous solution of strontium hydroxide for treatment at 80°C for 420 min. (The second treatment step) The treated metal titanium plate was dried at room temperature, whereby a strontium titanate film was formed on the metal titanium plate.

The film thickness, particle diameter, insulation property, and capacitance of the oxide film were measured. The results are shown in Table 1.

### <Example 3>

A metal titanium plate was placed in an 8 M aqueous solution of potassium hydroxide and treated at 80°C for 240 min. (The first treatment step) This metal titanium plate was dried at room temperature, placed in a mixed aqueous solution of barium hydroxide/strontium hydroxide with a total ion concentration of 1 M and then treated at 60°C for 360 min. (The second treatment step) The treated metal titanium plate was dried at room temperature, whereby a barium titanate film was formed on the metal titanium plate.

The film thickness, particle diameter, insulation property, and capacitance of the oxide film were measured. The results are shown in Table 1.

### <Example 4>

A metal titanium plate was placed in a 12 M aqueous solution of potassium hydroxide and treated at 60°C for 360 min. (The first treatment step) This metal titanium plate was dried at room temperature, placed in a 1 M aqueous solution of barium hydroxide at 70°C, and then treated at an increased temperature of 90°C for 360 min. (The second treatment step) The treated metal titanium plate was dried at room temperature, whereby a barium titanate film was formed on the metal titanium plate.

The film thickness, particle diameter, insulation property, and capacitance of the oxide film were measured. The results are shown in Table 1.

### <Comparative Example 1>

A 10 M aqueous solution of potassium hydroxide and a 0.5 M aqueous solution of barium hydroxide were mixed to prepare a mixed aqueous solution of potassium hydroxide/barium hydroxide. A metal titanium plate was placed in this mixed aqueous solution and treated at 80°C for 240 min. The treated metal titanium plate was dried at room temperature, whereby a barium titanate film was formed on the metal titanium plate.

The film thickness, particle diameter, insulation property, and capacitance of the oxide film were measured. The results are shown in Table 1.

**[Table 1]**

| | Film thickness (µm) | Average diameter of primary particles (nm) | Insulation property (leakage current) (applied voltage = 15 V) [µA] | Capacitance [nF] |
|---|---|---|---|---|
| Example 1 | 1.4 | 50 | 0.02 | 6350 |
| " 2 | 0.8 | 110 | 0.77 | 3420 |
| " 3 | 0.9 | 70 | 0.15 | 4404 |
| " 4 | 2.5 | 230 | 118 | 1004 |
| Comp.Ex.1 | 0.5 | 300 | 1580 | 9140 |

It will be seen from Table 1 that the complex titanium oxide films according to the present invention are stable and the use of those films enable the titanium electrolytic capacitors to have low leakage current and yet large capacitance.

### (Effects of the invention)

The invention provides a stable, dense complex titanium oxide film having a high dielectric constant on a metal titanium substrate surface and also provides a method for forming such a film. A titanium electrolytic capacitor compact in size, large in capacity, low in leakage current and having long life, has now been successfully developed through the utilization of such an oxide film.

## Claims

1. A complex titanium oxide film **characterized in that** it is a film of a complex titanium oxide containing titanium and at least one ion of metal selected from the group consisting of lithium, magnesium, calcium, strontium, barium and lanthanum formed on a metal titanium surface, with a film thickness of 5 µm or less and an average particle diameter of 5-250 nm.

2. A complex titanium oxide film according to claim 1 **characterized in that** the complex titanium oxide is at least one member selected from the group consisting of barium titanate, strontium titanate and barium-strontium titanate.

3. A complex titanium oxide film according to claim 1 **characterized in that** the complex titanium oxide film is formed by treating a metal titanium substrate with a hydroxide of an alkali metal and then by allowing the treated substrate to react with a compound containing the ion of the said metal.

4. A titanium electrolytic capacitor **characterized by** the use, as an anode, of a metal titanium substrate having a complex titanium oxide film according to any of claims 1 to 3.

5. A method for forming a complex titanium oxide film on a metal titanium substrate **characterized by** the steps of treating a metal titanium substrate with an aqueous solution of a hydroxide of an alkali metal and then treating the pretreated surface with an aqueous solution containing at least one ion of metal selected from the group consisting of lithium, magnesium, calcium, strontium, barium and lanthanum, thereby forming a film of a complex titanium oxide containing titanium and at least one ion of metal selected from the group consisting of lithium, magnesium, calcium, strontium, barium and lanthanum.

6. A method for forming a complex titanium oxide film according to claim 5 **characterized in that** the complex titanium oxide is at least one oxide selected from among barium titanate, strontium titanate and barium-strontium titanate.

7. A method for forming a complex titanium oxide film according to claim 5 **characterized in that** the complex titanium oxide film has a thickness of 5 µm or less and an average particle diameter of 5-250 nm.

8. A method for forming a complex titanium oxide film according to claim 5 **characterized in that** the hydroxide of the alkali metal is potassium hydroxide.

9. A complex titanium oxide film formed by any of the methods set forth in claims 5 to 8.

10. A titanium electrolytic capacitor **characterized by** the use, as an anode, of a metal titanium substrate having a complex titanium oxide film according to claim 9.

11. A method for forming a complex titanium oxide film on a metal titanium substrate **characterized by** the steps of forming a film of a potassium salt of titanic acid on the surface of a metal titanium substrate and then treating the film surface with an aqueous solution containing at least one ion of metal selected from the group consisting of lithium, magnesium, calcium, strontium, barium and lanthanum, thereby forming a film of a complex titanium oxide containing titanium and at least one ion of metal selected from the group consisting of lithium, magnesium, calcium, strontium, barium and lanthanum.

12. A method for forming a complex titanium oxide film according to claim 11 **characterized in that** the complex titanium oxide is at least one oxide selected from among barium titanate, strontium titanate and barium-strontium titanate.

13. A method for forming a complex titanium oxide film according to claim 11 **characterized in that** the complex titanium oxide film has a thickness of 5 µm or less and an average particle diameter of 5-250 nm.

14. A complex titanium oxide film formed by any of the methods set forth in claims 11 to 13.

15. A titanium electrolytic capacitor **characterized by** the use, as an anode, of the metal titanium substrate having the complex titanium oxide film according to claim 14.
